# EUROPEAN PATENT APPLICATION

(11) **EP 4 472 002 A1**
(43) Date of publication of application: **04.12.2024**
(21) Application number: 22924937.0
(22) Date of filing: 28.10.2022
(51) Int. Cl.: H02H 7/00, H02J 1/00

(54) **DC MICROGRID, DC MICROGRID SYSTEM, CONTROL METHOD, AND PROGRAM**

(30) Priority: 04.02.2022 JP 2022016516
(71) Applicant: Mitsubishi Heavy Industries, Ltd., Tokyo 100-8332 (JP)
(72) Inventor: IIDA Ryo, Tokyo 100-8332 (JP); SANADA Tomohiko, Tokyo 100-8332 (JP)
(74) Representative: Studio Torta S.p.A.
(86) International application number: PCT/JP2022/040424
(87) International publication number: WO 2023/149032

(57) **Abstract**

This DC microgrid comprises: a first fuse in which a positive electrode wire of a bus, to which another DC microgrid is connected, is connected to a first terminal, and a positive electrode wire, to which a plurality of power converters are connected via a plurality of fuses, is connected to a second terminal; a second fuse in which a negative electrode wire of the bus, to which another DC microgrid is connected, is connected to a first terminal, and a negative electrode wire, to which a plurality of power converters are connected via a plurality of fuses, is connected to a second terminal; and a first capacitor, in which a first terminal is connected to the positive electrode wire to which another DC microgrid is connected, and a second terminal is connected to the negative electrode wire to which another DC microgrid is connected, the first capacitor having a capacitance value at which at least either the first or second fuse can be disconnected.

## Description

### Technical Field

The present disclosure relates to a DC microgrid, a DC microgrid system, a control method, and a program.

Priority is claimed on Japanese Patent Application No. 2022-016516, filed Feb. 4, 2022, the content of which is incorporated herein by reference.

### Background Art

As one aspect of supplying power to a plurality of loads, a DC microgrid system in which DC microgrids cooperate with each other has attracted attention in various fields. PTLs 1 and 2 disclose a technology related to supplying power as a related technology.

### Citation List

### Patent Literature

[PTL 1] Japanese Unexamined Patent Application Publication No. 2017-022973
[PTL 2] Japanese Unexamined Patent Application Publication No. 2006-129594

### Summary of Invention

### Technical Problem

In a limited space such as a ship, it is desired that an amount of power interchange between DC microgrids is large. Meanwhile, in a case where the DC microgrids are connected and cooperate with each other and a defect such as a short circuit has occurred, a fuse may be used to disconnect the DC microgrid in which the defect has occurred. As the fuse, a rated fuse capable of withstanding a large current is desired from the viewpoint of efficiently cooperating the DC microgrids. Meanwhile, in a case where a defect such as a short circuit has occurred, a rated fuse that is disconnected (fused) even with a small current is desired from the viewpoint of immediately disconnecting the DC microgrid in which the defect has occurred. That is, in a case where the DC microgrids are cooperated by being connected to each other via the fuse, there is a trade-off relationship between efficiently cooperating the DC microgrids and immediately disconnecting the DC microgrid in which the defect has occurred in a case where the defect has occurred, and it is generally difficult to achieve both of them. Therefore, in a DC microgrid system in which DC microgrids are connected to each other via a fuse to cooperate with each other, there is a demand for a technology capable of easily disconnecting the fuse in a case where a short circuit has occurred in the DC microgrid even in a case where rating of the fuse is increased.

The present disclosure has been made to solve the above-described problem, and an object of the present disclosure is to provide a DC microgrid, a DC microgrid system, a control method, and a program capable of, easily disconnecting the fuse in a case where a short circuit has occurred in the DC microgrid even in a case where rating of the fuse is increased in a DC microgrid system in which DC microgrids are connected to each other via a fuse to cooperate with each other.

### Solution to Problem

In order to solve the above-described problem, a DC microgrid according to the present disclosure includes a first fuse having a first terminal connected to a positive electrode wire of a bus to which another cooperated DC microgrid is connected and a second terminal connected to a positive electrode wire of the bus to which a plurality of power converters are connected via a plurality of fuses, a second fuse having a first terminal connected to a negative electrode wire of the bus to which the other DC microgrid is connected and a second terminal connected to a negative electrode wire of the bus to which the plurality of power converters are connected via a plurality of fuses, and a first capacitor having a first terminal connected to the positive electrode wire of the bus to which the other DC microgrid is connected, a second terminal connected to the negative electrode wire of the bus to which the other DC microgrid is connected, and a capacitance capable of disconnecting (fusing) at least one of the first fuse and the second fuse.

A DC microgrid system according to the present disclosure includes the DC microgrid and the other DC microgrid cooperating with the DC microgrid.

A control method according to the present disclosure, performed by a DC microgrid including
a first fuse having a first terminal connected to a positive electrode wire of a bus to which another cooperated DC microgrid is connected, and a second terminal connected to a positive electrode wire of the bus to which a plurality of power converters are connected via a plurality of fuses,
a second fuse having a first terminal connected to a negative electrode wire of the bus to which the other DC microgrid is connected, and a second terminal connected to a negative electrode wire of the bus to which a plurality of power converters are connected via a plurality of fuses, and
a first capacitor having a first terminal connected to a positive electrode wire of the bus to which the other DC microgrid is connected, a second terminal connected to a negative electrode wire of the bus to which the other DC microgrid is connected, and a capacitance in which at least one of the first fuse and the second fuse is disconnectable,
in which each of the plurality of power converters includes
   a bridge circuit that generates AC power from DC power supplied from the positive electrode wire of the bus to which the plurality of power converters are connected and the negative electrode wire of the bus to which the plurality of power converters are connected,
   a second capacitor provided to be parallel with an input terminal of the bridge circuit and smoothing the DC power,
   a current sensor that detects a current flowing from the second capacitor to the bus in a case where the second capacitor discharges stored electric charge toward the bus, and
   a first switching element provided between the current sensor and the bus, the method includes
determining whether or not the current detected by the current sensor exceeds a predetermined threshold value; and
controlling the first switching element to be in an OFF state in a case where it is determined that the current detected by the current sensor exceeds the predetermined threshold value.

A program according to the present disclosure causes a computer of a DC microgrid including
a first fuse having a first terminal connected to a positive electrode wire of a bus to which another cooperated DC microgrid is connected, and a second terminal connected to a positive electrode wire of the bus to which a plurality of power converters are connected via a plurality of fuses,
a second fuse having a first terminal connected to a negative electrode wire of the bus to which the other DC microgrid is connected, and a second terminal connected to a negative electrode wire of the bus to which a plurality of power converters are connected via a plurality of fuses, and
a first capacitor having a first terminal connected to a positive electrode wire of the bus to which the other DC microgrid is connected, a second terminal connected to a negative electrode wire of the bus to which the other DC microgrid is connected, and a capacitance in which at least one of the first fuse and the second fuse is disconnectable,
in which each of the plurality of power converters includes
   a bridge circuit that generates AC power from DC power supplied from the positive electrode wire of the bus to which the plurality of power converters are connected and the negative electrode wire of the bus to which the plurality of power converters are connected,
   a second capacitor provided to be parallel with an input terminal of the bridge circuit and smoothing the DC power,
a current sensor that detects a current flowing from the second capacitor to the bus in a case where the second capacitor discharges stored electric charge toward the bus, and
   a first switching element provided between the current sensor and the bus, to execute:
   determining whether or not the current detected by the current sensor exceeds a predetermined threshold value; and
   controlling the first switching element to be in an OFF state in a case where it is determined that the current detected by the current sensor exceeds the predetermined threshold value.

### Advantageous Effects of Invention

With the DC microgrid, the DC microgrid system, the control method, and the program according to the present disclosure, in the DC microgrid system in which the DC microgrids are connected to each other via the fuses to cooperate with each other, even in a case where the rating of the fuse is increased, it is possible to easily disconnect the fuse in a case where a short circuit has occurred in the DC microgrid.

### Brief Description of Drawings

Fig. 1 is a diagram showing an example of a configuration of a DC microgrid system according to an embodiment of the present disclosure.
Fig. 2 is a diagram showing an example of a DC microgrid system 1 showing a specific example of a configuration of a power converter according to a first embodiment of the present disclosure.
Fig. 3 is a diagram showing an example of a first operation flow of the DC microgrid system according to an embodiment of the present disclosure.
Fig. 4 is a diagram showing an example of an image of a short circuit of a bus according to an embodiment of the present disclosure.
Fig. 5 is a diagram showing an example of an image of a short circuit in a bridge circuit according to an embodiment of the present disclosure.
Fig. 6 is a diagram showing an example of an image of a short circuit in a connecting portion between DC microgrids according to an embodiment of the present disclosure.
Fig. 7 is a diagram showing an example of a second operation flow of the DC microgrid system according to an embodiment of the present disclosure.
Fig. 8 is a first diagram showing an example of transition of a state of a switching element according to an embodiment of the present disclosure.
Fig. 9 is a second diagram showing an example of the transition of the state of the switching element according to an embodiment of the present disclosure.
Fig. 10 is a third diagram showing an example of the transition of the state of the switching element according to an embodiment of the present disclosure.
Fig. 11 is a fourth diagram showing an example of the transition of the state of the switching element according to an embodiment of the present disclosure.
Fig. 12 is a fifth diagram showing an example of the transition of the state of the switching element according to an embodiment of the present disclosure.
Fig. 13 is a sixth diagram showing an example of the transition of the state of the switching element according to an embodiment of the present disclosure.
Fig. 14 is a seventh diagram showing an example of the transition of the state of the switching element according to an embodiment of the present disclosure.
Fig. 15 is a schematic block diagram showing a configuration of a computer according to at least one embodiment.

### Description of Embodiments

### <Embodiment>

Hereinafter, embodiments will be described in detail with reference to the drawings. A DC microgrid system according to an embodiment of the present disclosure will be described.

### (Configuration of DC microgrid system)

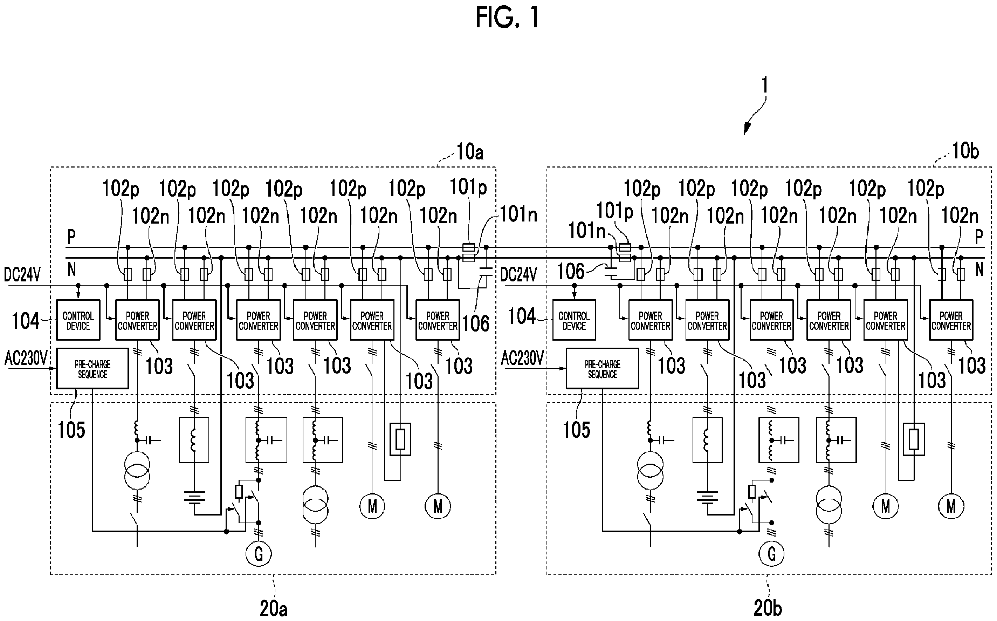

Fig. 1 is a diagram showing an example of a configuration of a DC microgrid system 1 according to an embodiment of the present disclosure. As shown in Fig. 1, the DC microgrid system 1 includes DC microgrids 10a and 10b and loads 20a and 20b. The DC microgrid system 1 is, for example, a system used in a ship. In the DC microgrid system 1, the DC microgrids 10a and 10b cooperate with each other. In a case where the DC microgrids 10a and 10b cooperate with each other and a short circuit occurs in any part of the DC microgrid system 1 (for example, between the positive electrode wire P and the negative electrode wire N of the bus or any of a plurality of power converters 103), the DC microgrid system 1 is a system capable of disconnecting the system in which the short circuit occurs.

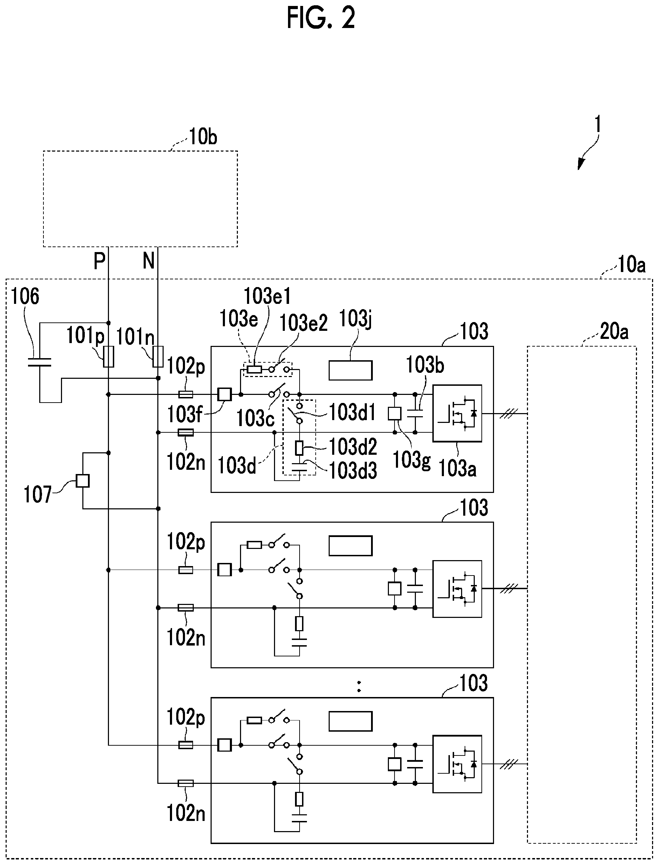

As shown in Fig. 1, the DC microgrid 10a includes bus tie fuses 101p (an example of a first fuse) and 101n (an example of a second fuse), a plurality of fuses 102p and 102n, the plurality of power converters 103, a control device 104, a pre-charge sequence 105, a capacitor 106 (an example of a first capacitor), and a voltage sensor 107 (the voltage sensor 107 is shown in Fig. 2 to be described later). The number of each of the fuses 102p and 102n is the same as the number of the power converters 103, and is six in the example shown in Fig. 1.

A bus tie fuse 101p is a fuse provided in the positive electrode wire P of the bus in the DC microgrid system 1. The bus tie fuse 101n is a fuse provided in the negative electrode wire N of the bus in the DC microgrid system 1.

As shown in Fig. 1, each of the plurality of fuses 102p is provided between the positive electrode wire P and one of the plurality of power converters 103. As shown in Fig. 1, each of the plurality of fuses 102n is provided between the negative electrode wire N and one of the plurality of power converters 103.

As shown in Fig. 1, each of the plurality of power converters 103 is connected to the positive electrode wire P via one fuse 102p. As shown in Fig. 1, each of the plurality of power converters 103 is connected to the negative electrode wire N via one fuse 102n. As shown in Fig. 1, each of the plurality of power converters 103 is connected to a load 20a.

Fig. 2 is a diagram showing an example of the DC microgrid system 1 showing a specific example of the configuration of the power converter 103 according to the first embodiment of the present disclosure. In the DC microgrid system 1 shown in Fig. 2, the voltage sensor 107 is shown.

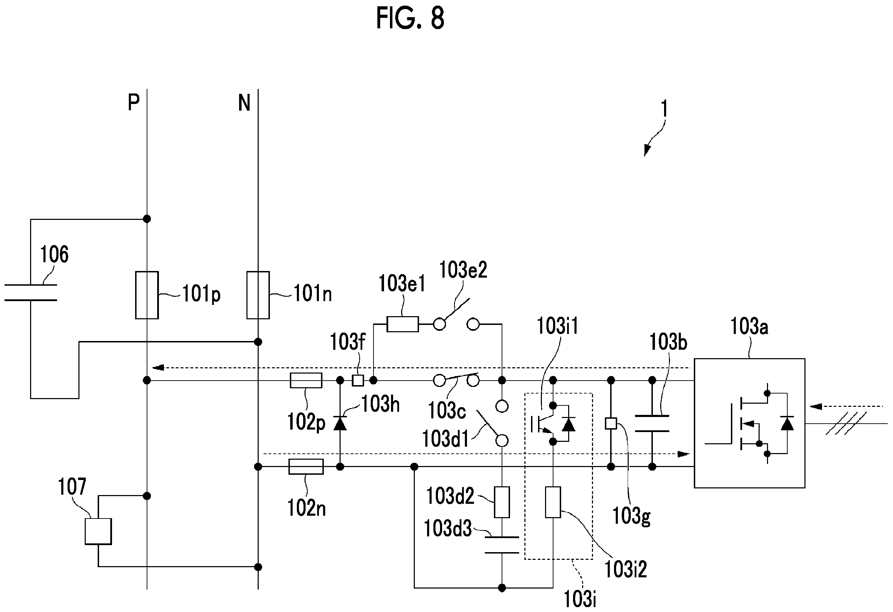

As shown in Fig. 2, each of the plurality of power converters 103 includes a bridge circuit 103a, a capacitor 103b (an example of a second capacitor), a cutoff circuit 103c (an example of a first switching element), an energy absorption circuit 103d, a charging circuit 103e, a current sensor 103f, a voltage sensor 103g, a protective diode 103h, a braking circuit 103i, and a control circuit 103j (note that the protective diode 103h and the braking circuit 103i are shown in Figs. 8 to 14 described later).

The bridge circuit 103a is a circuit that generates three-phase AC power from DC power. The bridge circuit 103a is configured by using, for example, a switching element such as a transistor. Examples of the transistors include power semiconductor elements such as a SiC MOSFET (silicon carbide metal oxide semiconductor field effect transistor) or an IGBT (insulated gate bipolar transistor).

The capacitor 103b smoothes the DC voltage input to the bridge circuit 103a. In a case where the current sensor 103f detects a current exceeding a predetermined threshold value, the cutoff circuit 103c disconnects the power converter 103 from the bus based on control by the control circuit 103j. Examples of the cutoff circuit 103c include power semiconductor elements such as a SiC MOSFET or an IGBT, and a physical switch.

In a case where regenerative power is generated in the load of the power converter 103 and a short circuit occurs in the bus or the power converter 103, the energy absorption circuit 103d absorbs energy generated by a current flowing from the load to the power converter 103. As shown in Fig. 2, the energy absorption circuit 103d includes a switching element 103d1, a resistor 103d2, and a capacitor 103d3. In a case where regenerative power is generated in the load of the power converter 103 and a short circuit occurs in the bus or inside the power converter 103, the switching element 103d1 turns to an ON state based on control by the control circuit 103j, and the energy absorption circuit 103d causes a current to flow according to a time constant determined by the resistor 103d2 and the capacitor 103d3, thereby preventing an increase in the DC voltage (that is, overvoltage) of the power converter 103 due to the regenerative power in the load of the power converter 103. Examples of the switching element 103d1 include a power semiconductor element such as a SiC MOSFET or an IGBT, and a physical switch.

The charging circuit 103e is a circuit that absorbs the difference between the voltage on the bus side (that is, the potential difference between the positive electrode wire P and the negative electrode wire N) that may occur at the time of restart and the voltage at the input of the bridge circuit 103a (that is, the potential difference between both ends of the capacitor 103b) and limits the current flowing until the potential difference reaches zero. The charging circuit 103e includes, for example, a resistor 103e1 and a switching element 103e2 (an example of a third switching element).

The current sensor 103f detects a current flowing from the bridge circuit 103a side to the bus side. For example, in a case where the positive electrode wire P and the negative electrode wire N of the bus are short-circuited, a current flows from the capacitor 103b toward the bus. The current sensor 103f detects the current.

The voltage sensor 103g detects a voltage at the input of the bridge circuit 103a, that is, a potential difference between both ends of the capacitor 103b. The protective diode 103h allows a current to flow in a case where regenerative power is generated in the load of the power converter 103 and a short circuit occurs inside the bus or the power converter 103.

The braking circuit 103i brakes, for example, a ship using the DC microgrid system 1 (that is, decelerates or stops the ship navigation). The braking circuit 103i includes a switching element 103i1 and a resistor 103i2.

Examples of the switching element 103i1 include a power semiconductor element such as a SiC MOSFET or an IGBT, a physical switch, and the like (note that an IGBT is shown in Figs. 8 to 14 described later). The switching element 103i1 is in an OFF state in a case where deceleration or stopping of navigation is not performed, and is controlled to be in an ON state in a case where deceleration or stopping of navigation is performed. The resistor 103i2 sets how the brake works (that is, the degree of deceleration) according to the resistance value.

The control circuit 103j controls the power converter 103. For example, in a case where the load of the power converter 103 is a three-phase AC motor, the control circuit 103j controls switching of the transistors in the bridge circuit 103a to generate AC power for driving the three-phase AC motor from DC power. For example, the control circuit 103j controls each of switching elements 103c, 103d1, 103e2, and 103i1 to be in an ON state or an OFF state. Specifically, the control circuit 103j controls the switching element 103c to be in an ON state in a case where the current sensor 103f detects a current equal to or less than a predetermined threshold value, and controls the switching element 103c to be in an OFF state in a case where the current sensor 103f detects a current exceeding the predetermined threshold value. In a case where the control circuit 103j controls the switching element 103c to be in an OFF state, the control circuit 103j does not control the switching element 103c to be in an ON state until it is confirmed that the short circuit is improved (for example, until the potential difference between the positive electrode wire P and the negative electrode wire N of the bus is a desired potential difference and the potential difference between both ends of the capacitor 103b falls within a predetermined threshold value with respect to the desired potential difference). For example, in a case where regenerative power is generated in the load of the power converter 103 and a short circuit occurs in the bus or inside the power converter 103, the control circuit 103j controls each of the switching elements 103c, 103d1, 103e2, and 103i1 to be in an ON state or an OFF state. Details of the control by the control circuit 103j for setting each of the switching elements 103c, 103d1, 103e2, and 103i1 to be in an ON state or an OFF state will be described later. In Figs. 8 to 14 described later, the control circuit 103j is not shown.

The pre-charge sequence 105 controls the charging state in the initial operation of the generator G in the load 20a. The capacitor 106 stores an electric charge capable of disconnecting the bus tie fuses 101p and 101n. That is, as the capacitance of the capacitor 106, a capacitance capable of storing electric charges that can disconnect the bus tie fuses 101p and 101n is selected. For example, the capacitance is determined so that the square time product of the short-circuit current determined by the impedance of the short-circuit path and the resistance value inside the capacitor 106 exceeds the square time product of the short-circuit current of the bus tie fuses 101p and 101n. The voltage sensor 107 detects a potential difference between the positive electrode wire P and the negative electrode wire N of the bus, that is, a potential difference between both ends of the capacitor 106 via the bus tie fuses 101p and 101n.

The load 20a is a load connected to each of the power converters 103 of the DC microgrid 10a. The load includes a motor that causes the ship to navigate, and regenerative power is generated by the motor.

The DC microgrid 10b has the same configuration as the DC microgrid 10a. A load 20b is a load connected to each of the power converters 103 of the DC microgrid 10b. Fig. 1 shows an example in which the load 20b has the same configuration as that of the load 20a. However, the configuration of the load 20b may be different from that of the load 20a.

### (Operation performed by DC microgrid system)

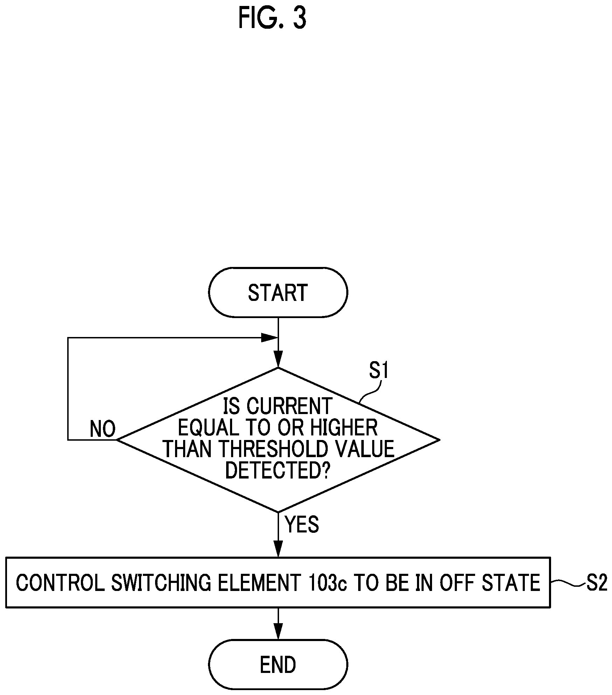

Next, an operation performed by the DC microgrid system 1 will be described with reference to Figs. 3 to 14.

### (Operation in a case where bus is short-circuited)

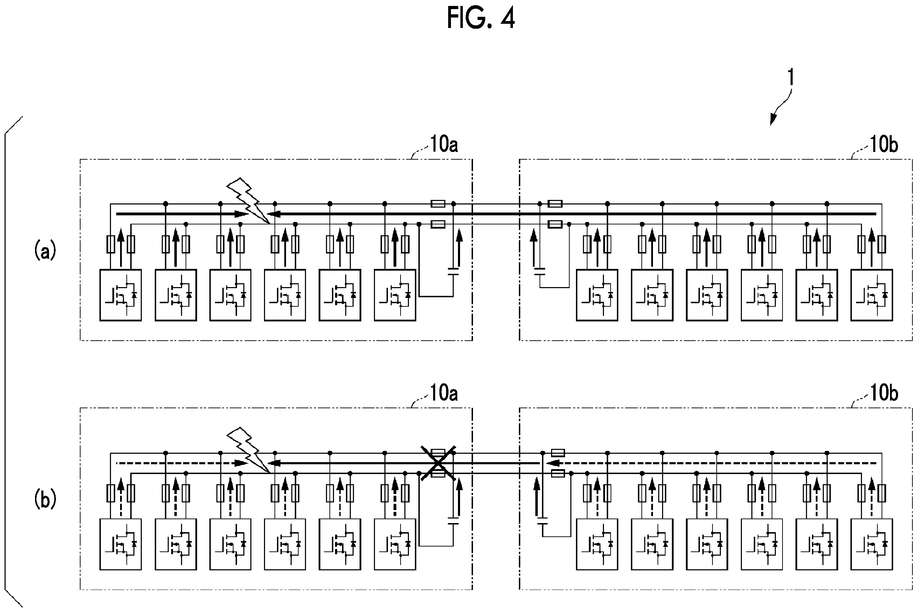

First, an operation performed by the DC microgrid system 1 in a case where the positive electrode wire P and the negative electrode wire N of the bus are short-circuited will be described with reference to Figs. 3 and 4. Fig. 3 is a diagram showing an example of a first operation flow of the DC microgrid system 1 according to an embodiment of the present disclosure. Fig. 4 is a diagram showing an example of an image of a short circuit of a bus according to an embodiment of the present disclosure. Here, it is assumed that the control circuit 103j controls each of the switching elements 103c to be in an ON state and each of switching elements 103d1, 103e2, and 103i1 to be in an OFF state. In this state, as shown in Fig. 4, it is assumed that a short circuit occurs in the bus of the DC microgrid 10a.

In this case, as shown in part (a) of Fig. 4, the electric charge stored in the capacitor 103b of each of the plurality of power converters 103 included in the DC microgrids 10a and 10b and the electric charge stored in each of capacitors 106 included in the DC microgrids 10a and 10b flow into the short-circuit point as a current.

The current sensor 103f of each of the plurality of power converters 103 detects a current flowing from the capacitor 103b to the short-circuit point. The current sensor 103f outputs the value of the detected current to the control circuit 103j. The control circuit 103j compares the current value detected by the current sensor 103f with a predetermined threshold value. The control circuit 103j determines whether or not the current value detected by the current sensor 103f exceeds a threshold value (step S1). Specifically, the threshold value is set to a current smaller than a current flowing to the short-circuit point as a current of the electric charge stored in the capacitor 103b. In this case, the control circuit 103j determines that all the currents detected by each of current sensors 103f exceed the threshold value.

In a case where the control circuit 103j determines that the current detected by the current sensor 103f exceeds the threshold value, the control circuit 103j controls the switching element 103c connected to the current sensor 103f that has detected the current exceeding the threshold value to be in an OFF state (step S2). By this control, all the power converters 103 are disconnected from the bus.

Even after all the power converters 103 are disconnected from the bus, a current flows from the capacitor 106 toward the short-circuit point until the electric charge stored in the capacitor 106 is discharged. This current flows through the bus tie fuse 101p. Since the capacitor 106 stores electric charges capable of disconnecting the bus tie fuses 101p and 101n, the bus tie fuse 101p is disconnected by the current flowing from the capacitor 106 toward the short-circuit point. As a result, as shown in a part (b) of Fig. 4, the DC microgrid 10a in which the short circuit has occurred can be disconnected from the normal DC microgrid 10b.

### (Operation in a case where short circuit occurs in power converter)

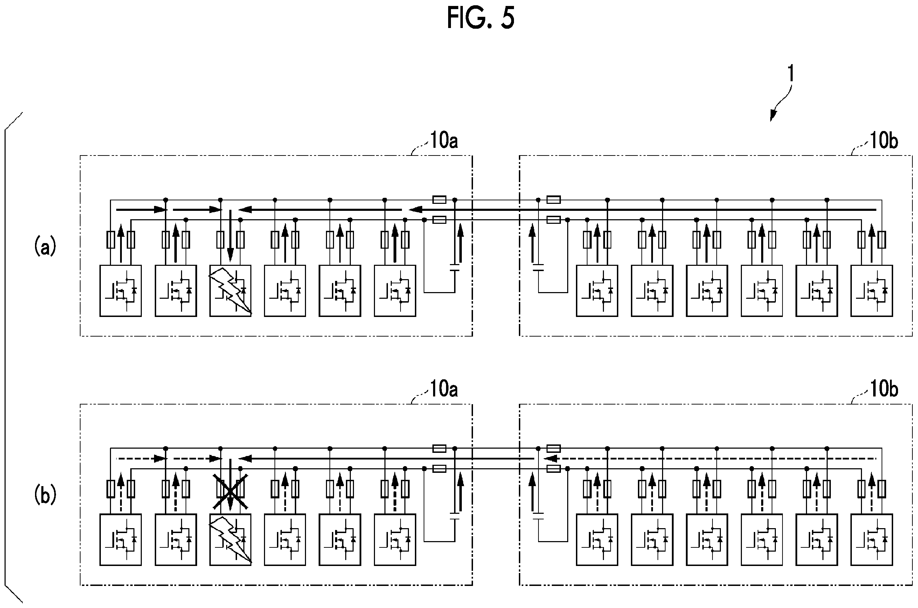

Next, an operation performed by the DC microgrid system 1 in a case where a short circuit occurs in the bridge circuit 103a of the power converter 103 will be described with reference to Figs. 3 and 5. Fig. 5 is a diagram showing an example of an image of a short circuit in the bridge circuit 103a according to an embodiment of the present disclosure. Here, it is assumed that the control circuit 103j controls each of the switching elements 103c to be in an ON state and each of the switching elements 103d1, 103e2, and 103i1 to be in an OFF state. In this state, as shown in Fig. 5, it is assumed that a short circuit occurs in one of bridge circuit 103a of the DC microgrid 10a.

In this case, as shown in part (a) of Fig. 5, the electric charge stored in the capacitor 103b of each of the plurality of power converters 103 included in the DC microgrids 10a and 10b and the electric charge stored in each of the capacitors 106 included in the DC microgrids 10a and 10b flow into the short-circuit point as a current.

The current sensor 103f of each of the power converters 103 other than the power converter 103 in which the short circuit has occurred among the plurality of power converters 103 detects the current flowing from the capacitor 103b to the short-circuit point. In addition, since a current flowing from the bus side to the bridge circuit 103a flows through the current sensor 103f of the power converter 103 in which a short circuit has occurred (in a case where a current is actually detected within an error range due to noise or measurement accuracy but can be ignored), the current detected by the current sensor 103f of the power converter 103 in which a short circuit has occurred is a current flowing into the power converter 103. In a case where the current detected by the current sensor 103f is the current flowing into the power converter 103, the control circuit 103j does not change the operation.

Each current sensor 103f outputs the value of the detected current to the control circuit 103j. The control circuit 103j compares the current value detected by the current sensor 103f with a predetermined threshold value. The control circuit 103j determines whether or not the current value detected by the current sensor 103f exceeds a threshold value (step S1). Specifically, the threshold value is set to a current smaller than a current flowing to the short-circuit point as a current of the electric charge stored in the capacitor 103b, in this case, the control circuit 103j determines that all the currents detected by the current sensors 103f other than the current sensor 103f of the power converter 103 in which the short circuit has occurred exceed the threshold value.

In a case where the control circuit 103j determines that the current detected by the current sensor 103f exceeds the threshold value, the control circuit 103j controls the switching element 103c connected to the current sensor 103f that has detected the current exceeding the threshold value to be in an OFF state (step S2). By this control, all the power converters 103 other than the power converter 103 in which the short circuit has occurred are disconnected from the bus.

Even after all the power converters 103 other than the power converter 103 in which the short circuit has occurred are disconnected from the bus, a current flows from the capacitor 106 toward the short-circuit point until the electric charge stored in the capacitor 106 is discharged. This current flows through the bus tie fuse 101p and the fuses 102p and 102n connected to the power converter 103 in which the short circuit has occurred. Since the fuses 102p and 102n have a smaller capacitance than the bus tie fuse 101p (and 101n), in this case, at least one of the fuses 102p and 102n is disconnected (fused) before the bus tie fuse 101p is disconnected (fused). Since the capacitor 106 stores electric charges that can disconnect the bus tie fuses 101p and 101n, at least one of the bus tie fuses 101p and 101n is disconnected by the current flowing from the capacitor 106 toward the short-circuit point. As a result, the DC microgrid 10a in which a short circuit has occurred can be disconnected from the normal DC microgrid 10b.

### (Operation in a case where short circuit occurs in connecting portion between DC microgrids)

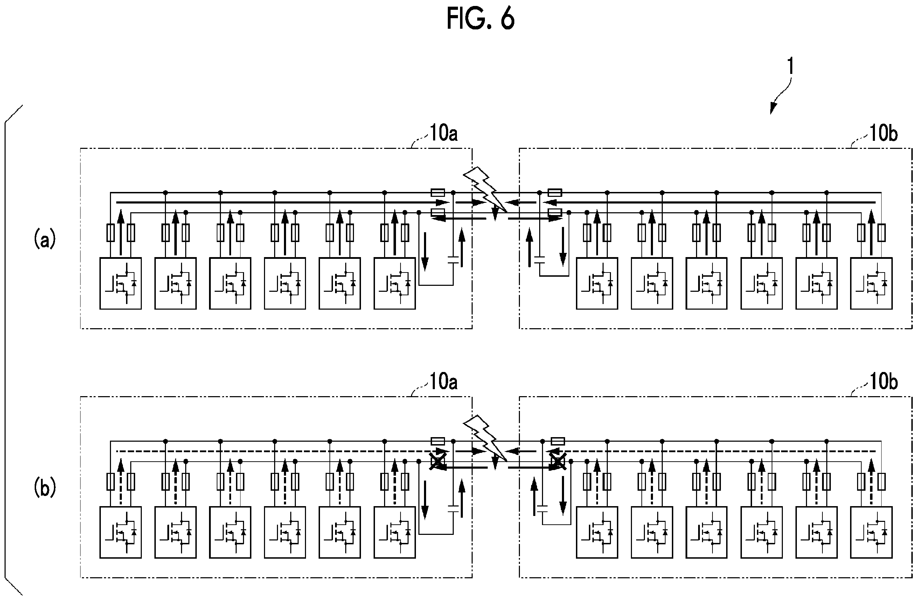

Next, an operation performed by the DC microgrid system 1 in a case where a short circuit occurs at the connecting portion between the DC microgrids 10a and 10b will be described with reference to Figs. 3 and 6. Fig. 6 is a diagram showing an example of an image of a short circuit in a connecting portion between DC microgrids (10a and 10b) according to an embodiment of the present disclosure. Here, it is assumed that the control circuit 103j controls each of the switching elements 103c to be in an ON state and each of the switching elements 103d1, 103e2, and 103i1 to be in an OFF state. In this state, as shown in Fig. 6, it is assumed that a short circuit occurs at the connecting portion between the DC microgrids 10a and 10b.

In this case, as shown in part (a) of Fig. 6, the electric charge stored in the capacitor 103b of each of the plurality of power converters 103 included in the DC microgrids 10a and 10b and the electric charge stored in each of the capacitors 106 included in the DC microgrids 10a and 10b flow into the short-circuit point as a current.

The current sensor 103f of each of the plurality of power converters 103 detects a current flowing from the capacitor 103b to the short-circuit point.

Each current sensor 103f outputs the value of the detected current to the control circuit 103j. The control circuit 103j compares the current value detected by the current sensor 103f with a predetermined threshold value. The control circuit 103j determines whether or not the current value detected by the current sensor 103f exceeds a threshold value (step S1). Specifically, the threshold value is set to a current smaller than a current flowing to the short-circuit point as a current of the electric charge stored in the capacitor 103b, in this case, the control circuit 103j determines that all the currents detected by the current sensors 103f other than the current sensor 103f of the power converter 103 in which the short circuit has occurred exceed the threshold value.

In a case where the control circuit 103j determines that the current detected by the current sensor 103f exceeds the threshold value, the control circuit 103j controls the switching element 103c connected to the current sensor 103f that has detected the current exceeding the threshold value to be in an OFF state (step S2). By this control, all the power converters 103 are disconnected from the bus.

Even after all the power converters 103 are disconnected from the bus, a current flows from the capacitor 106 toward the short-circuit point until the electric charge stored in the capacitor 106 is discharged. This current flows through the bus tie fuse 101n. In this case, the bus tie fuse 101n is disconnected (fused). As a result, the DC microgrids 10a and 10b are disconnected from each other.

### (Operation in case where regenerative power is generated in load and short-circuit occurs in bus)

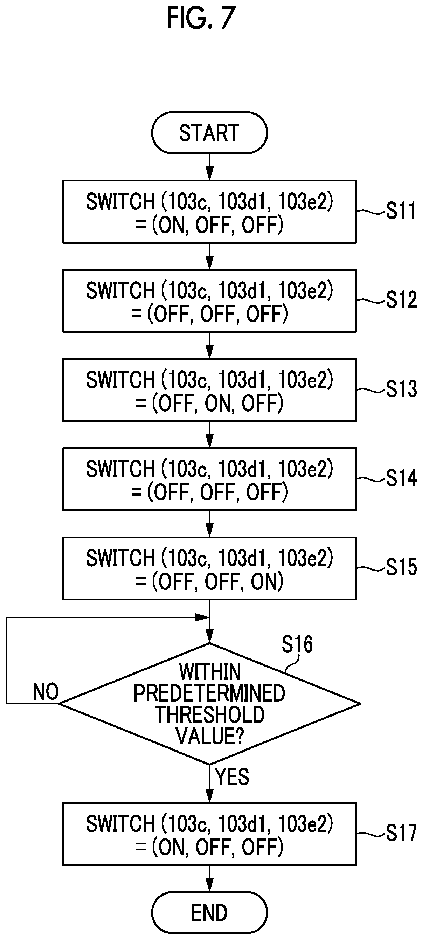

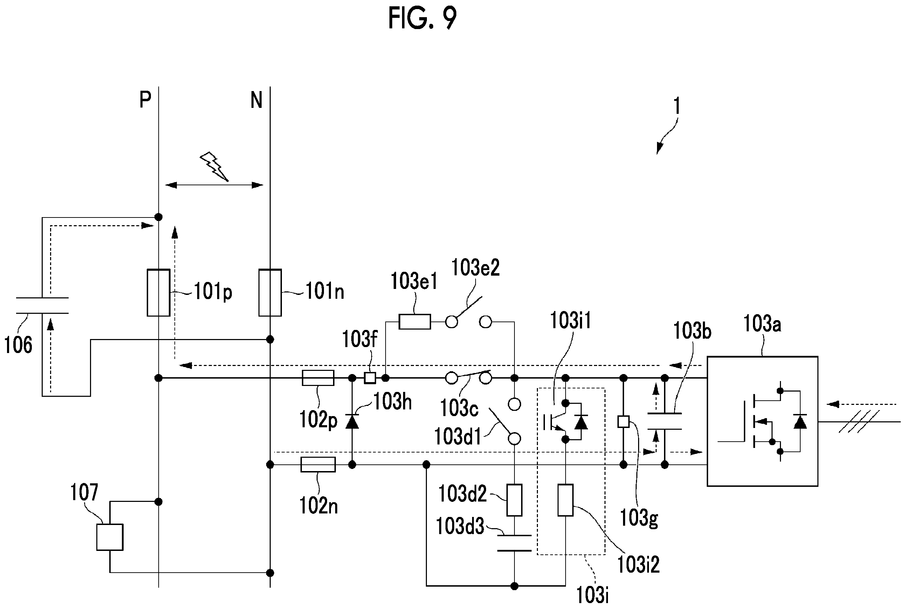

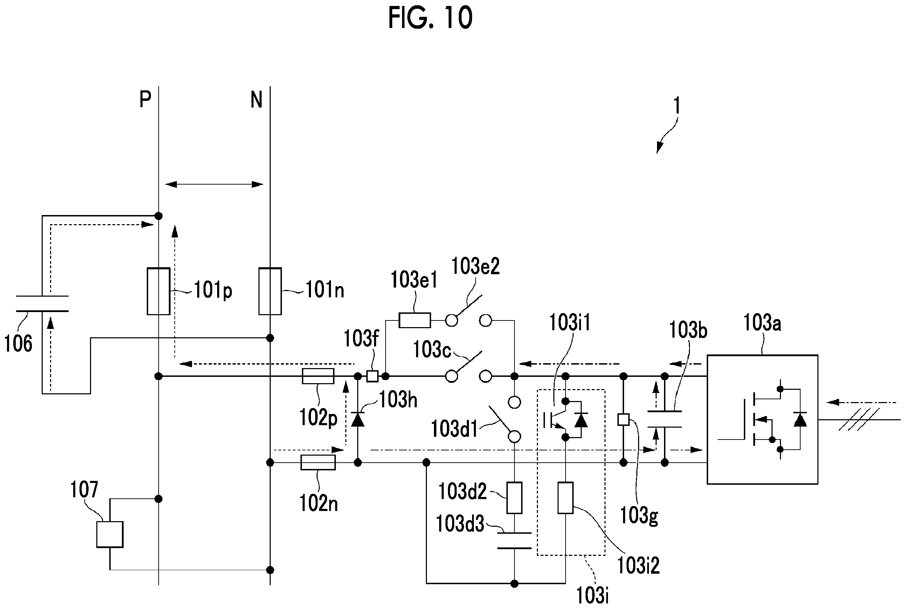

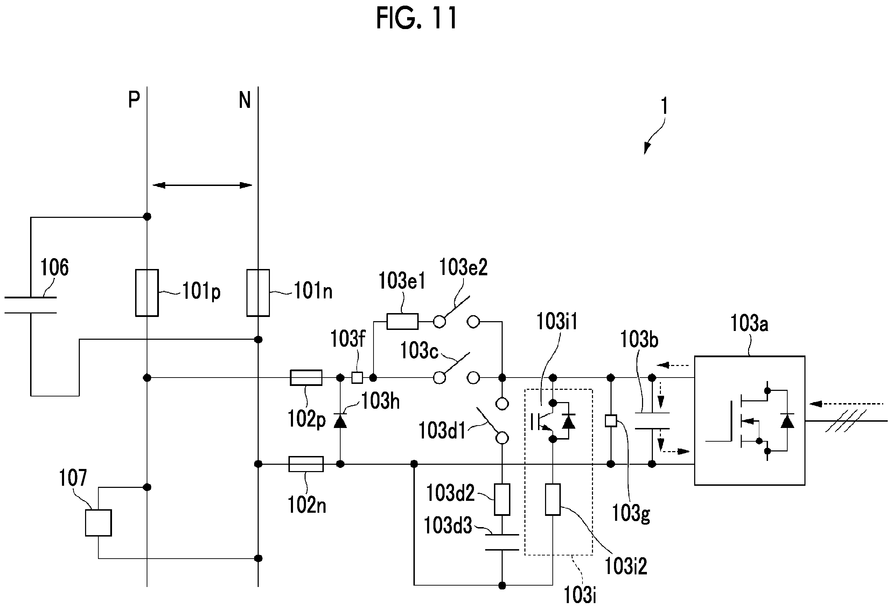

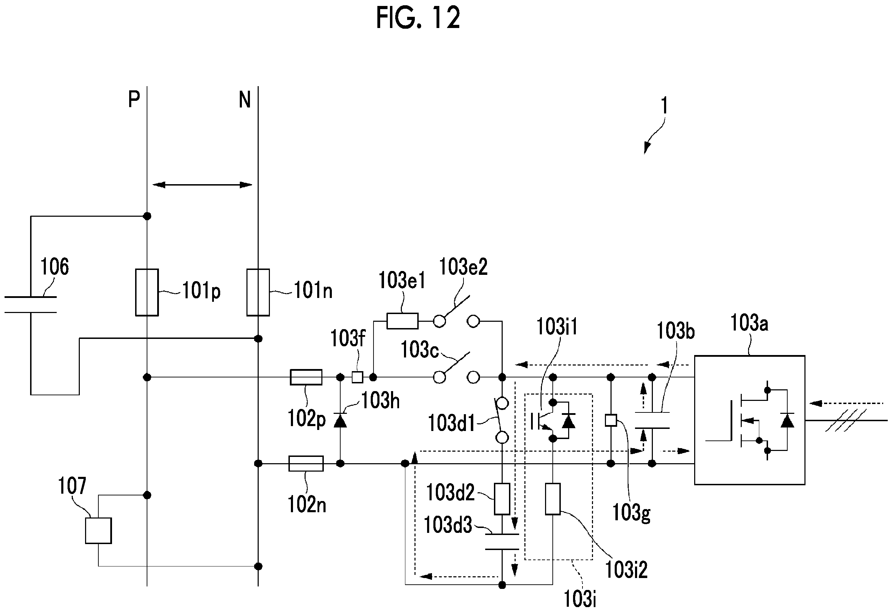

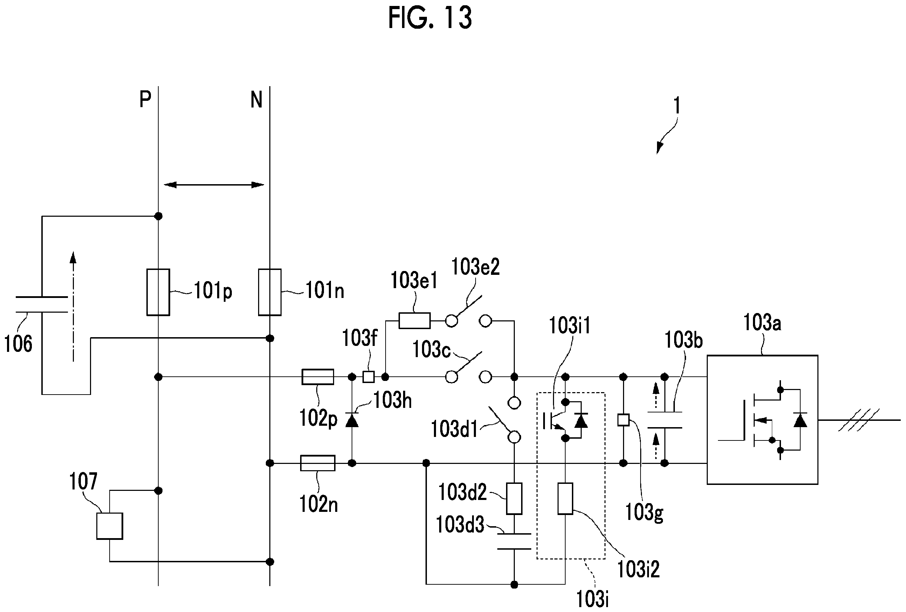

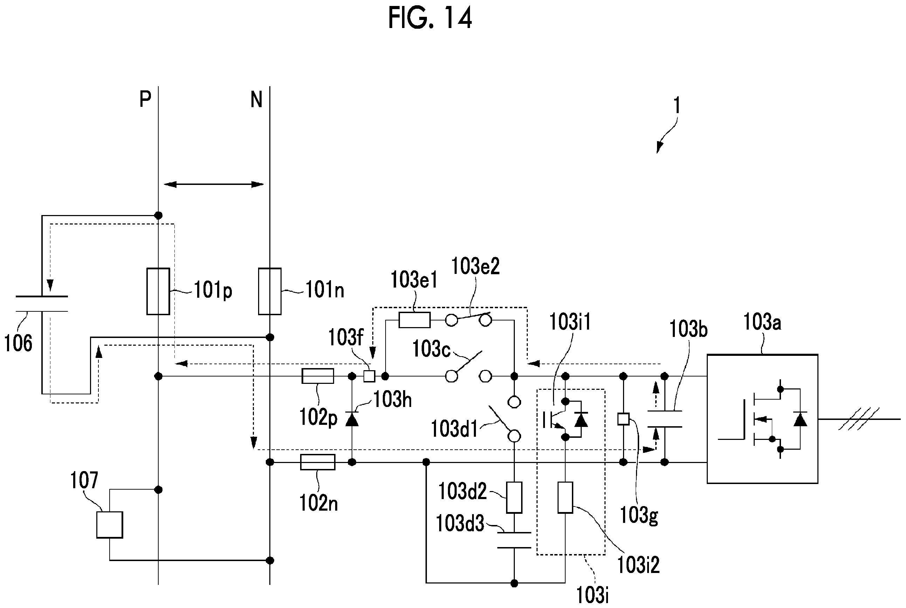

Next, an operation performed by the DC microgrid system 1 in a case where regenerative power is generated in the load of the power converter 103 and a short circuit occurs in the bus will be described with reference to Figs. 7 to 14. Examples of the load in this case include a three-phase AC motor. Fig. 7 is a diagram showing an example of a second operation flow of the DC microgrid system 1 according to an embodiment of the present disclosure. Fig. 8 is a first diagram showing an example of transition of a state of a switching element according to an embodiment of the present disclosure. Fig. 9 is a second diagram showing an example of transition of a state of a switching element according to an embodiment of the present disclosure. Fig. 10 is a third diagram showing an example of the transition of the state of the switching element according to an embodiment of the present disclosure. Fig. 11 is a fourth diagram showing an example of the transition of the state of the switching element according to an embodiment of the present disclosure. Fig. 12 is a fifth diagram showing an example of the transition of the state of the switching element according to an embodiment of the present disclosure. Fig. 13 is a sixth diagram showing an example of transition of a state of a switching element according to an embodiment of the present disclosure. Fig. 14 is a seventh diagram showing an example of transition of a state of a switching element according to an embodiment of the present disclosure. Here, it is assumed that the control circuit 103j controls the switching element 103c in the power converter 103 that drives the load in which the regenerative power is generated to be in an ON state and controls the switching elements 103d1, 103e2, and 103i1 to be in an OFF state. The switching element 103i1 in the power converter 103 that drives the load in which the regenerative power is generated is always in an OFF state in the following description.

In a case where the control circuit 103j controls the switching element 103c of the power converter 103 in which the regenerative power is generated to be in an ON state and controls the switching elements 103d1 and 103e2 to be in an OFF state (step S11), as shown in Fig. 8, the current flowing by the generated regenerative power flows from the output side to the input side inside the bridge circuit 103a, further flows to the bus via the current sensor 103f, the switching element 103c, and the fuse 102p, and returns as a return current from the bus to the bridge circuit 103a via the fuse 102n. The current flowing by the generated regenerative power is smaller than the current discharged from the capacitor 103b at the time of short circuit, and is a current having a value sufficiently smaller than the threshold value used when the control circuit 103j determines whether or not the current detected by the current sensor 103f exceeds the threshold value.

In this state, as shown in Fig. 9, it is assumed that a short circuit occurs in the bus. In this case, as shown in Fig. 9, the current flowing due to the generated regenerative power flows toward the short-circuit point, and the electric charge stored in each of capacitors 103b and 106 flows toward the short-circuit point as a current. Then, when the electric charge stored in the capacitor 103b flows to the short-circuit point as a current, the control circuit 103j determines that the current detected by the current sensor 103f exceeds the threshold value, and controls the switching element 103c to be in an OFF state (step S12).

When the switching element 103c turns to an OFF state, a current flows via the protective diode 103h as shown in Fig. 10. Since the switching element 103c turns to an OFF state, the current caused by the generated regenerative power flowing from the bridge circuit 103a to the bus via the switching element 103c and the fuse 102p does not flow.

However, in a case where the load is a motor, a current for charging the capacitor 103b flows as shown in Fig. 11 due to energy stored in an inductor in the motor. Since there is no path through which this current flows other than the capacitor 103b, the charging of the capacitor 103b is continued until the energy stored in the inductor in the motor runs out. As a result, the voltage of the capacitor 103b rises. That is, the potential difference between both ends of the capacitor 103b increases. The voltage sensor 103g detects a potential difference between both ends of the capacitor 103b, and outputs the detected potential difference to the control circuit 103j. The control circuit 103j compares the potential difference detected by the voltage sensor 103g with a predetermined threshold value. The control circuit 103j determines whether or not the potential difference detected by the voltage sensor 103g exceeds a threshold value. For example, the threshold value in this case is set to not exceed the rated voltage of the switching elements configuring the bridge circuit 103a. The control circuit 103j controls the switching element 103d1 to be in an OFF state in a case where the voltage sensor 103g detects a potential difference equal to or less than a threshold value, and controls the switching element 103d1 to be in an ON state in a case where the voltage sensor 103g detects a potential difference exceeding the threshold value.

In a case where the voltage sensor 103g detects a potential difference exceeding the threshold value and the control circuit 103j controls the switching element 103d1 to be in an ON state (step S13), as shown in Fig. 12, the electric charge stored in the capacitor 103b flows through the energy absorption circuit 103d as a current. When the current flows through the energy absorption circuit 103d, the potential difference between both ends of the capacitor 103b decreases. Since this current is determined by the resistance value of the resistor 103d2, the maximum current is suppressed. In this state, since the capacitor 103b and the capacitor 103d3 are connected to be parallel with each other, the maximum amount of the electric charge that can move from the capacitor 103b to the capacitor 103d3 is determined according to the ratio between the capacitance of the capacitor 103b and the capacitance of the capacitor 103d3.

Each of voltage sensors 103g and 107 outputs a detection result to the control circuit 103j. Therefore, the control circuit 103j knows the detection result of each of the voltage sensors 103g and 107. When the potential difference between both ends of the capacitor 103b reaches to be equal to or less than the predetermined potential difference, the control circuit 103j controls the switching element 103d1 to be in an OFF state as shown in Fig. 13 (step S14). The operation of step S14 may be performed by the control device 104 after each of the voltage sensors 103g and 107 outputs the detection result to the control device 104. When the operation of step S14 is performed, there is a possibility that the potential difference between the positive electrode wire P and the negative electrode wire N of the bus (that is, the potential difference between both ends of the capacitor 106) and the potential difference between both ends of the capacitor 103b are deviated by a predetermined threshold value or more.

Therefore, the control circuit 103j sets the switching element 103e2 to be in an ON state (step S15). Accordingly, the resistor 103e1 is provided in the path between the capacitor 106 and the capacitor 103b, and the resistor 103e1 absorbs the difference between the voltage on the bus side (that is, the potential difference between the positive electrode wire P and the negative electrode wire N) and the voltage at the input of the bridge circuit 103a (that is, the potential difference between both ends of the capacitor 103b).

The control circuit 103j compares the detection result of each of the voltage sensors 103g and 107, and determines whether or not the difference indicated by the comparison result is within a predetermined threshold value (step S16). In a case where it is determined that the difference indicated by the comparison result is not within the predetermined threshold value (NO in step S 16), the control circuit 103j returns to the operation of step S16. In a case where the control circuit 103j determines that the difference indicated by the comparison result is within the predetermined threshold value (YES in step S16), the control circuit 103j controls the switching element 103c to be in an ON state and the switching element 103e2 to be in an OFF state as shown in Fig. 14 (step S17).

In the DC microgrid system 1 according to another embodiment of the present disclosure, the operation of step S17 may be performed in a case where a predetermined time elapses without performing the operation of step S16.

In addition, in an embodiment of the present disclosure described above, the current sensor 103f is used to detect the current. However, in another embodiment of the present disclosure, the switching element 103c may be a semiconductor element and an increase in the current may be detected using a technology of non-saturation detection (so-called DESAT detection).

### (Effects)

The DC microgrid system 1 according to an embodiment of the present disclosure has been described above. In the DC microgrid system 1, the DC microgrid 10a includes a first fuse 101p, a second fuse 101n, and a first capacitor 106. The first terminal of the first fuse 101p is connected to the positive electrode wire P of the bus to which another cooperated DC microgrid 10b is connected, and the second terminal of the first fuse 101p is connected to the positive electrode wire P of the bus to which the plurality of power converters 103 are connected via the plurality of fuses 102p. The second fuse 101n has a first terminal connected to the negative electrode wire N of the bus to which the other DC microgrid 10b is connected, and a second terminal connected to the negative electrode wire N of the bus to which the plurality of power converters 103 are connected via the plurality of fuses 102n. The first capacitor 106 has a first terminal connected to the positive electrode wire P of the bus to which the other DC microgrid 10b is connected, a second terminal connected to the negative electrode wire N of the bus to which the other DC microgrid 10b is connected, and a capacitance capable of disconnecting at least one of the first fuse 101p and the second fuse 101n.

Thus, in the DC microgrid system 1, in a case where the electric charge stored in the first capacitor 106 flows as a current toward the short-circuit point, the current flows from the first capacitor 106 to the short-circuit point via the first fuse 101p and the second fuse 101n. The first capacitor 106 has a capacitance capable of disconnecting at least one of the first fuse 101p and the second fuse 101n. Therefore, in a case where a current flows from the first capacitor 106 to the short-circuit point via the first fuse 101p and the second fuse 101n, at least one of the first fuse 101p and the second fuse 101n can be disconnected. As a result, the DC microgrid 10a can be disconnected from another DC microgrid 10b.

Note that the order of the operation in the embodiment of the present disclosure may be changed as long as appropriate operation is performed.

Each of the storage unit and the storage device (including a register and a latch) in the embodiment of the present disclosure may be provided anywhere within a range in which transmission and reception of appropriate information are performed. A plurality of each of the storage unit or the storage device may be provided as long as appropriate information is transmitted and received, and data may be stored in a distributed manner.

Although the embodiments of the present disclosure have been described, the above-described control circuit 103j and other control devices may have a computer system therein. The above-described operation is stored in a computer-readable storage medium in the form of a program, and the operation is performed by a computer reading and executing the program. A specific example of the computer will be described below.

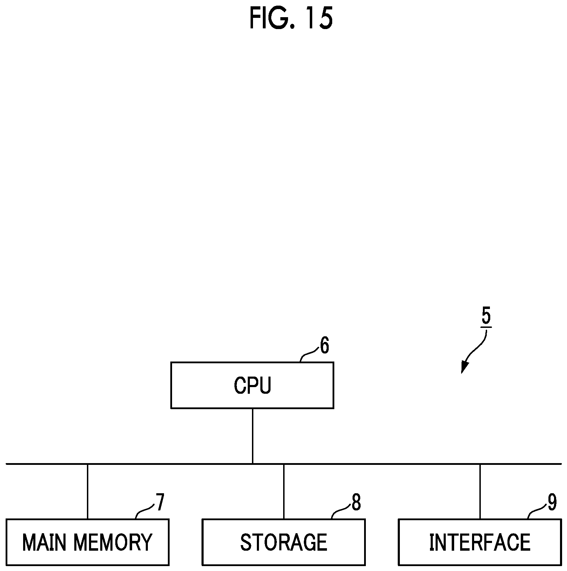

Fig. 15 is a schematic block diagram showing a configuration of a computer according to at least one exemplary embodiment. As shown in Fig. 15, a computer 5 includes a CPU6, a main memory 7, a storage 8, and an interface 9. For example, each of the above-described control circuit 103j and other control devices is mounted on the computer 5. The operation of each processing unit described above is stored in the storage 8 in the form of a program. The CPU6 reads the program from the storage 8, develops the program in the main memory 7, and executes the above-described operation according to the program. The CPU6 secures a storage area corresponding to each of the above-described storage units in the main memory 7 according to the program.

Examples of the storage 8 include a hard disk drive (HDD), a solid state drive (SSD), a magnetic disk, a magneto-optical disk, a compact disc read only memory (CD-ROM), a digital versatile disc read only memory (DVD-ROM), and a semiconductor memory such as a flash memory. The storage 8 may be an internal medium directly connected to a bus of the computer 5, or may be an external medium connected to the computer 5 via the interface 9 or a communication line. In a case where the program is distributed to the computer 5 through a communication line, the computer 5 that has received the distribution may develop the program in the main memory 7 and execute the above-described operation. In at least one embodiment, the storage 8 is a non-transitory tangible storage medium.

The program may realize a part of the above-described functions. Furthermore, the program may be a so-called differential file (differential program) that can realize the above-described functions in combination with a program already recorded in the computer system.

While certain embodiments according to the present disclosure have been described, these embodiments have been presented by way of example only, and are not intended to limit the scope of the disclosure. Various additions, various omissions, various substitutions, and various modifications may be made to these embodiments without departing from the scope of the disclosure.

### <Additional note>

The DC microgrid 10a, the DC microgrid system 1, the control method, and the program according to each embodiment of the present disclosure are understood as follows, for example.

(1) A DC microgrid 10a according to a first aspect includes
   a first fuse 101p having a first terminal connected to a positive electrode wire P of a bus to which another cooperated DC microgrid 10b is connected, and a second terminal connected to a positive electrode wire P of the bus to which a plurality of power converters 103 are connected via a plurality of fuses 102p,
   a second fuse 101n having a first terminal connected to a negative electrode wire N of the bus to which the another DC microgrid 10b is connected, and a second terminal connected to a negative electrode wire N of the bus to which a plurality of power converters 103 are connected via a plurality of fuses 102n, and
   a first capacitor 106 having a first terminal connected to a positive electrode w ire P of the bus to which the other DC microgrid 10b is connected, a second terminal c onnected to a negative electrode wire N of the bus to which the other DC microgrid 10 b is connected, and a capacitance in which at least one of the first fuse 101p and the se cond fuse 101n is disconnectable.

The DC microgrid 10a includes a first capacitor 106 having a capacitance capable of disconnecting at least one of the first fuse 101p and the second fuse 101n. Thus, in the DC microgrid system in which the DC microgrids 10a, 10b are connected to each other via the fuses 101p, 101n to cooperate with each other, even in a case where the rating of the fuses 101p, 101n is increased, the DC microgrid 10a can easily disconnect the fuses 101p, 101n in a case where a short circuit occurs in the DC microgrid 10a.

(2) A DC microgrid 10a according to a second aspect is the DC 10a according to (1),
in which the first terminal and the second terminal of the first capacitor 106 may be connected via the second fuse 101n.

As a result, in the DC microgrid 10a, the fuse 101n can be disconnected when the connecting portion between the DC microgrids 10a and 10b is short-circuited.

(3) A DC microgrid 10a according to a third aspect is the DC microgrid 10a according to (1) or (2),
in which each of the plurality of power converters 103 may include
a bridge circuit 103a for generating AC power from DC power supplied from a positive electrode wire P of the bus to which the plurality of power converters 103 are connected and a negative electrode wire N of the bus to which the plurality of power converters 103 are connected,
a second capacitor 103b provided to be parallel with an input terminal of the bridge circuit 103a for smoothing the DC power,
a current sensor 103f for detecting a current flowing from the second capacitor 103b to the bus in a case where the second capacitor 103b discharges the stored electric charge toward the bus,
a first switching element 103c provided between the current sensor 103f and the bus, and
a control device 104 for determining whether or not the current detected by the current sensor 103f exceeds a predetermined threshold value, and controlling the first switching element 103c to be in an OFF state in a case where it is determined that the current detected by the current sensor 103f exceeds the predetermined threshold value.

Thus, the DC microgrid 10a can disconnect the power converter 103 in which a short circuit has occurred from the bus.

(4) A DC microgrid 10a according to a fourth aspect is the DC microgrid 10a according to (3), further including
a first path provided to be parallel with the second capacitor 103b, having a second switching element 103d1, turning to a conduction state in a case where the second switching element 103d1 turns to an ON state, and turning to a disconnection state in a case where the second switching element 103d1 turns to an OFF state,
in which the control device 104 may be configured to control the first switching element 103c to be in an OFF state in a case where regenerative power is generated in a load of the power converter 103, and control the second switching element 103d1 to be in an ON state in a case where a path of a current flowing due to generation of the regenerative power is only the second capacitor 103b.

Thus, the DC microgrid 10a can reduce the potential difference between both ends of the second capacitor 103b.

(5) A DC microgrid 10a according to a fifth aspect is the DC microgrid 10a according to (3) or (4), further including
a second path provided to be parallel with the first switching element 103c and having a third switching element 103e2 and a resistor 103e1 connected in series with the third switching element 103e2,
in which the control device 104 may be configured to control the first switching element 103c to be in an OFF state and control the third switching element 103e2 to be in an ON state in a case where it is determined that comparison result between the potential difference between both ends of the first capacitor 106 and the potential difference between both ends of the second capacitor 103b is within a range of the predetermined threshold value.

Thus, even in a case where the potential difference between the positive electrode wire P and the negative electrode wire N of the bus (that is, the potential difference between both ends of the capacitor 106) is different from the potential difference between both ends of the capacitor 103b, the DC microgrid 10a can absorb the potential difference by the resistor 103e1. In addition, the DC microgrid 10a can charge the first capacitor 106 via the second path. As a result, the DC microgrid 10a can set an appropriate potential in a case where restarting is performed.

(6) A DC microgrid system 1 according to a sixth aspect includes
the DC microgrid 10a according to any one of (1) to (5), and
the other DC microgrid 10b cooperating with the DC microgrid 10a.

The DC microgrid system 1 includes a first capacitor 106 having a capacitance capable of disconnecting at least one of the first fuse 101p and the second fuse 101n. Thus, in the DC microgrid system 1 in which the DC microgrids 10a, 10b are connected to each other via the fuses 101p, 101n to cooperate with each other, even in a case where the rating of the fuses 101p, 101n is increased, the DC microgrid system 1 can easily disconnect the fuses 101p, 101n in a case where a short circuit occurs in the DC microgrid 10a.

(7) A control method according to a seventh aspect, performed by a DC microgrid 10a including
a first fuse 101p having a first terminal connected to a positive electrode wire P of a bus to which another cooperated DC microgrid 10b is connected, and a second terminal connected to a positive electrode wire P of the bus to which a plurality of power converters 103 are connected via a plurality of fuses 102p,
a second fuse 101n having a first terminal connected to a negative electrode wire N of the bus to which the another DC microgrid 10b is connected, and a second terminal connected to a negative electrode wire N of the bus to which a plurality of power converters 103 are connected via a plurality of fuses 102n, and
a first capacitor 106 having a first terminal connected to a positive electrode wire P of the bus to which the other DC microgrid 10b is connected and a second terminal connected to a negative electrode wire N of the bus to which the other DC microgrid 10b is connected, and a capacitance in which at least one of the first fuse 101p and the second fuse 101n is disconnectable,
in which each of the plurality of power converters 103 includes
   a bridge circuit 103a for generating AC power from DC power supplied from a positive electrode wire P of the bus to which the plurality of power converters 103 are connected and a negative electrode wire N of the bus to which the plurality of power converters 103 are connected,
   a second capacitor 103b provided to be parallel with an input terminal of the bridge circuit 103a for smoothing the DC power,
   a current sensor 103f for detecting a current flowing from the second capacitor 103b to the bus in a case where the second capacitor 103b discharges the stored electric charge toward the bus, and
   a first switching element 103c provided between the current sensor 103f and the bus, the method includes
determining whether or not the current detected by the current sensor 103f exceeds a predetermined threshold value; and
controlling the first switching element 103c to be in an OFF state in a case where it is determined that the current detected by the current sensor 103f exceeds the predetermined threshold value.

The control method includes a first capacitor 106 having a capacitance capable of disconnecting at least one of the first fuse 101p and the second fuse 101n. Thus, in the control method, in the DC microgrid system 1 in which the DC microgrids 10a, 10b are connected to each other via the fuses 101p, 101n to cooperate with each other, even in a case where the rating of the fuses 101p, 101n is increased, the fuses 101p, 101n can be easily disconnected in a case where a short circuit occurs in the DC microgrid 10a.

(8) A program according to an eighth aspect causing a computer (5) of a DC microgrid 10a including
a first fuse 101p having a first terminal connected to a positive electrode wire P of a bus to which another cooperated DC microgrid 10b is connected, and a second terminal connected to a positive electrode wire P of the bus to which a plurality of power converters 103 are connected via a plurality of fuses 102p,
a second fuse 101n having a first terminal connected to a negative electrode wire N of the bus to which the another DC microgrid 10b is connected, and a second terminal connected to a negative electrode wire N of the bus to which a plurality of power converters 103 are connected via a plurality of fuses 102n, and
a first capacitor 106 having a first terminal connected to a positive electrode wire P of the bus to which the other DC microgrid 10b is connected and a second terminal connected to a negative electrode wire N of the bus to which the other DC microgrid 10b is connected, and a capacitance in which at least one of the first fuse 101p and the second fuse 101n is disconnectable,
in which each of the plurality of power converters 103 includes
   a bridge circuit 103a for generating AC power from DC power supplied from a positive electrode wire P of the bus to which the plurality of power converters 103 are connected and a negative electrode wire N of the bus to which the plurality of power converters 103 are connected,
   a second capacitor 103b provided to be parallel with an input terminal of the bridge circuit 103a for smoothing the DC power,
   a current sensor 103f for detecting a current flowing from the second capacitor 103b to the bus in a case where the second capacitor 103b discharges the stored electric charge toward the bus, and
   a first switching element 103c provided between the current sensor 103f and the bus, to execute:
      determining whether or not the current detected by the current sensor 103f exceeds a predetermined threshold value; and
      controlling the first switching element 103c to be in an OFF state in a case wh ere it is determined that the current detected by the current sensor 103f exceeds the pre determined threshold value.

The program includes a first capacitor 106 having a capacitance capable of disconnecting at least one of the first fuse 101p and the second fuse 101n. Thus, in the DC microgrid system 1 in which the DC microgrids 10a, 10b are connected to each other via the fuses 101p, 101n to cooperate with each other, even in a case where the rating of the fuses 101p, 101n is increased, the program can easily disconnect the fuses 101p, 101n in a case where a short circuit occurs in the DC microgrid 10a.

### Industrial Applicability

With the DC microgrid, the DC microgrid system, the control method, and the program according to the present disclosure, in the DC microgrid system in which the DC microgrids are connected to each other via the fuses to cooperate with each other, even in a case where the rating of the fuse is increased, it is possible to easily disconnect the fuse in a case where a short circuit has occurred in the DC microgrid.

### Reference Signs List

1: DC microgrid system
5: computer
6: CPU
7: main memory
8: storage
9: interface
10a, 10b: DC microgrid
20a, 20b: load
101p, 101n, 102p, 102n: fuse
103: power converter
103a: bridge circuit
103b, 103d3, 106: capacitor
103c, 103d1, 103e2: switching element
103d: energy absorption circuit
103d2, 103e1: resistor
103e: charging circuit
103f: current sensor
103g, 107: voltage sensor
104: control device
105: pre-charge sequence

## Claims

1. A DC microgrid comprising:
a first fuse having a first terminal connected to a positive electrode wire of a b us to which another cooperated DC microgrid is connected, and a second terminal con nected to a positive electrode wire of the bus to which a plurality of power converters a re connected via a plurality of fuses;
a second fuse having a first terminal connected to a negative electrode wire of the bus to which the other DC microgrid is connected, and a second terminal connecte d to a negative electrode wire of the bus to which a plurality of power converters are c onnected via a plurality of fuses; and
a first capacitor having a first terminal connected to a positive electrode wire o f the bus to which the other DC microgrid is connected, a second terminal connected to a negative electrode wire of the bus to which the other DC microgrid is connected, an d a capacitance in which at least one of the first fuse and the second fuse is disconnect able.

2. The DC microgrid according to Claim 1,
wherein the first terminal and the second terminal of the first capacitor are con nected via the second fuse.

3. The DC microgrid according to Claim 1 or 2,
wherein each of the plurality of power converters includes
a bridge circuit that generates AC power from DC power supplied from the positive electrode wire of the bus to which the plurality of power converters are connected and the negative electrode wire of the bus to which the plurality of power converters are connected,
a second capacitor provided to be parallel with an input terminal of the bridge circuit and smoothing the DC power,
a current sensor that detects a current flowing from the second capacitor to the bus in a case where the second capacitor discharges stored electric charge toward the bus,
a first switching element provided between the current sensor and the bus, and
a control device that determines whether or not the current detected by the current sensor exceeds a predetermined threshold value, and controls the first switching element to be in an OFF state in a case where it is determined that the current detected by the current sensor exceeds the predetermined threshold value.

4. The DC microgrid according to Claim 3, further comprising:
a first path provided to be parallel with the second capacitor, having a second s witching element, turning to a conduction state in a case where the second switching el ement turns to an ON state, and turning to a disconnection state in a case where the sec ond switching element turns to an OFF state,
wherein in the control device, regenerative power is generated in a load of the power converter, the first switching element is controlled to be in an OFF state, and the second switching element is controlled to be in an ON state in a case where a path of a current flowing due to the generation of the regenerative power is only the second ca pacitor.

5. The DC microgrid according to Claim 3 or 4, further comprising:
a second path provided to be parallel with the first switching element, and havi ng a third switching element and a resistor connected in series with the third switching element,
wherein the control device controls the first switching element to be in an OFF state and controls the third switching element to be in an ON state in a case where it i s determined that a comparison result between a potential difference between both end s of the first capacitor and a potential difference between both ends of the second capa citor is within a range of the predetermined threshold value.

6. A DC microgrid system comprising:
the DC microgrid according to any one of Claims 1 to 5; and
the other DC microgrid cooperating with the DC microgrid.

7. A control method, performed by a DC micro grid including
a first fuse having a first terminal connected to a positive electrode wire of a bus to which another cooperated DC microgrid is connected, and a second terminal connected to a positive electrode wire of the bus to which a plurality of power converters are connected via a plurality of fuses,
a second fuse having a first terminal connected to a negative electrode wire of the bus to which the other DC microgrid is connected, and a second terminal connected to a negative electrode wire of the bus to which a plurality of power converters are connected via a plurality of fuses, and
a first capacitor having a first terminal connected to a positive electrode wire of the bus to which the other DC microgrid is connected, a second terminal connected to a negative electrode wire of the bus to which the other DC microgrid is connected, and a capacitance in which at least one of the first fuse and the second fuse is disconnectable,
in which each of the plurality of power converters includes
a bridge circuit that generates AC power from DC power supplied from the positive electrode wire of the bus to which the plurality of power converters are connected and the negative electrode wire of the bus to which the plurality of power converters are connected,
a second capacitor provided to be parallel with an input terminal of the bridge circuit and smoothing the DC power,
a current sensor that detects a current flowing from the second capacitor to the bus in a case where the second capacitor discharges stored electric charge toward the bus, and
a first switching element provided between the current sensor and the bus, the method comprising:
determining whether or not the current detected by the current sensor exceeds a predetermined threshold value; and
controlling the first switching element to be in an OFF state in a case where it is determined that the current detected by the current sensor exceeds the predetermined threshold value.

8. A program causing a computer of a DC microgrid including
a first fuse having a first terminal connected to a positive electrode wire of a bus to which another cooperated DC microgrid is connected, and a second terminal connected to a positive electrode wire of the bus to which a plurality of power converters are connected via a plurality of fuses,
a second fuse having a first terminal connected to a negative electrode wire of the bus to which the other DC microgrid is connected, and a second terminal connected to a negative electrode wire of the bus to which a plurality of power converters are connected via a plurality of fuses, and
a first capacitor having a first terminal connected to a positive electrode wire of the bus to which the other DC microgrid is connected, a second terminal connected to a negative electrode wire of the bus to which the other DC microgrid is connected, and a capacitance in which at least one of the first fuse and the second fuse is disconnectable,
in which each of the plurality of power converters includes
a bridge circuit that generates AC power from DC power supplied from the positive electrode wire of the bus to which the plurality of power converters are connected and the negative electrode wire of the bus to which the plurality of power converters are connected,
a second capacitor provided to be parallel with an input terminal of the bridge circuit and smoothing the DC power,
a current sensor that detects a current flowing from the second capacitor to the bus in a case where the second capacitor discharges stored electric charge toward the bus, and
a first switching element provided between the current sensor and the bus, to execute:
determining whether or not the current detected by the current sensor exceeds a predetermined threshold value; and
controlling the first switching element to be in an OFF state in a case where it is determined that the current detected by the current sensor exceeds the predetermined threshold value.
